# EUROPÄISCHE PATENTANMELDUNG

(11) **EP 4 550 659 A1**
(43) Veröffentlichungstag der Anmeldung: **07.05.2025**
(21) Anmeldenummer: 24202905.6
(22) Anmeldetag: 26.09.2024
(51) Int. Cl.: H02S 20/10, F24S 25/12, F24S 25/65

(54) **PHOTOVOLTAIK-ANLAGE UND VERFAHREN ZUR MONTAGE EINER PHOTOVOLTAIK-ANLAGE**

(30) Priorität: 03.11.2023 DE 102023130403
(71) Anmelder: NOVO-TECH GMBH & CO. KG, 06449 Aschersleben (DE)
(72) Erfinder:
(74) Vertreter: Dantz, Jan Henning

(57) **Zusammenfassung**

Photovoltaik-Anlage (1) mit einer Tragkonstruktion mit einer Vielzahl von in einem Untergrund (3) verankerbaren Pfosten (2) und mindestens einem bifazialen Photovoltaikmodul (4) zwischen zwei benachbarten Pfosten (2), wobei das mindestens eine bifaziale Photovoltaikmodul (4) an vier Ecken an jeweils einem Halteelement (5) gehalten ist und jedes Halteelement (5) an einem der Pfosten (2) fixiert ist. Ferner betrifft die Erfindung ein Verfahren zur Montage einer Photovoltaik-Anlage (1), die mit geringem Materialeinsatz aufgestellt werden kann und leicht zu montieren ist.

## Beschreibung

Die vorliegende Erfindung betrifft eine Photovoltaik-Anlage mit einer Tragkonstruktion mit einer Vielzahl von in einem Untergrund verankerbaren Pfosten und mindestens einem bifazialen Photovoltaikmodul zwischen zwei benachbarten Pfosten und ein Verfahren zur Montage einer Photovoltaik-Anlage.

Die EP 3 742 602 A1 offenbart eine Photovoltaik-Anlage mit einer Tragkonstruktion, bei der mehrere Pfosten im Erdreich befestigt werden, die dann über Riegel miteinander verbunden sind. Die Pfosten und Riegel bilden ein im Wesentlichen rechteckiges Montagefeld aus, in dem jeweils mindestens ein Photovoltaikmodul angeordnet wird. Dadurch lässt sich das Photovoltaikmodul umlaufend stabil an den Riegeln und Pfosten fixieren. Der bauliche Aufwand für eine solche Tragkonstruktion ist vergleichsweise hoch, weil die Riegel jeweils den Abstand zwischen zwei benachbarten Pfosten überbrücken und daher eine Vielzahl von Montageschritten für die Erstellung der Tragkonstruktion notwendig sind.

Es ist daher Aufgabe der folgenden Erfindung eine Photovoltaik-Anlage und ein Verfahren zur Montage einer Photovoltaik-Anlage zu schaffen, die mit geringem Materialeinsatz eine stabile Halterung der Photovoltaikmodule ermöglichen und eine effektive Montage durchgeführt werden kann.

Diese Aufgabe wird mit einer Photovoltaik-Anlage mit den Merkmalen des Anspruchs 1 sowie einem Verfahren mit den Merkmalen des Anspruchs 12 gelöst.

Die erfindungsgemäße Photovoltaik-Anlage umfasst eine Tragkonstruktion mit einer Vielzahl von in einem Untergrund verankerbaren Pfosten und mindestens einem bifazialen Photovoltaikmodul zwischen zwei benachbarten Pfosten, wobei das mindestens eine bifaziale Photovoltaikmodul an vier Ecken an jeweils einem Halteelement gehalten ist und jedes Halteelement an einem der Pfosten fixiert ist. Dadurch kann das mindestens eine bifaziale Photovoltaikmodul über die vier separaten Halteelemente an zwei Pfosten fixiert werden, was die Anbringung zusätzlicher Riegel oder Streben entbehrlich macht. Dadurch kann der Montageaufwand verringert und der Materialeinsatz zur Erstellung der Tragkonstruktion reduziert werden.

Das mindestens eine bifaziale Photovoltaikmodul ist nur an den vier Ecken gehalten und kann im Übrigen zwischen den Pfosten schwebend angeordnet sein. Zudem wird das Problem einer Verschattung an einer Oberseite des Photovoltaikmoduls reduziert, da die Halteelemente jeweils nur in einem Eckbereich angeordnet sind, so dass die von oben kommende Sonneneinstrahlung an beiden Seiten des mindestens einen bifazialen Photovoltaikmoduls genutzt werden kann, um Strom zu erzeugen.

Vorzugsweise weist jedes Halteelement eine Länge in Richtung einer Längskante des mindestens einen Photovoltaikmoduls auf, die weniger als 20 % des Abstandes zwischen zwei benachbarten Pfosten beträgt, vorzugsweise zwischen 5 % bis 15 %. Die bifazialen Photovoltaikmodule sind im Wesentlichen plattenförmig ausgebildet und weisen beispielsweise an ihrer längeren horizontalen Seite jeweils eine Länge zwischen 1 m bis 2,5 m auf, beispielsweise 1,5 m bis 2 m. Jedes Halteelement besitzt hingegen eine Erstreckung in horizontale Richtung, die deutlich geringer ist, beispielsweise zwischen 5cm bis 30cm, insbesondere 10cm bis 20cm, so dass der überwiegende Teil einer Längskante des Photovoltaikmoduls nicht von einem Halteelement überdeckt ist.

Um Temperaturschwankungen ausgleichen zu können, ist das mindestens eine bifaziale Photovoltaikmodul verschiebbar an den Halteelementen gehalten. Hierfür kann jedes Halteelement eine Nut aufweisen, in die ein Rand eingefügt ist, insbesondere ein Rand an einer Längskante des mindestens einen Photovoltaikmoduls, der beispielsweise durch eine Metallleiste gebildet ist. Dann kann bei hohen Temperaturen das Photovoltaikmodul sich in Längsrichtung ausdehnen und ist verschiebbar in der Nut gehalten, was Wärmespannungen vermeidet. Zudem lassen sich Toleranzen besser ausgleichen.

Das mindestens eine Photovoltaikmodul ist bevorzugt von beiden Pfosten beabstandet angeordnet, beispielsweise in einem Abstand von mindestens 1 cm bis 8 cm, vorzugsweise 2 cm bis 6 cm. Dadurch lässt sich eine großflächige Anlage weniger blickdicht gestalten.

Für eine stabile Fixierung der Photovoltaikmodule ist jedes Halteelement über eine Gewindestange an einem der Pfosten fixierte, die jeweils den Pfosten zumindest teilweise durchgreift. Vorzugsweise durchgreift die Gewindestange den Pfosten vollständig und ist an der zu dem Halteelement gegenüberliegenden Seite durch eine Mutter fixiert. Die Mutter kann beispielsweise quaderförmig ausgebildet sein, und zumindest eine der Muttern bildet einen Abstandshalter für ein Photovoltaikmodul aus, das auf der Seite der mindestens einen Mutter angeordnet ist. Die Einbringung von Bohrungen in die Pfosten kann nach dem Aufstellen der Pfosten erfolgen, was die Montage vereinfacht, da dann die Höhe der einzelnen Photovoltaikmodule noch auf der Baustelle festgelegt werden kann.

Der mindestens eine Pfosten und/oder die Halteelemente und/oder die Mutter sind bevorzugt aus einem extrudierten Material aus einer Mischung aus Kunstsoff und Naturfasern enthaltende Füllstoffe hergestellt. Solche Naturfasern können insbesondere lignozellulosehaltige Fasern sein, die aus Holzabfällen. Stroh, Heu, Reisschalen, Bambus, Gräsern oder anderen Naturfasern bereitgestellt werden können. Als Kunststoff kann beispielsweise ein Polymer oder eine Mischung aus Polymeren eingesetzt werden, beispielsweise mit Polypropylen, Polyethylen oder anderen Polyolefinen. Ferner können weitere Zusatzstoffe als Füllstoffe zugegeben werden, beispielsweise Fasern aus Kunststoff, Glas oder anderen Materialien oder pulverförmige Zusatzstoffe, wie gemahlener Zement. Der Anteil an Füllstoffen kann dabei über 50 % betragen, beispielsweise zwischen 50 % bis 80 %. Trotz des hohen Anteils an Naturstoffen und Füllstoffen können solche extrudierten Profile auch in feuchten Umgebungen eingesetzt werden, da sie witterungsbeständig und verwesungsbeständig ausgebildet sind. Die Profile können bei Herstellung von Pfosten, Halteelementen oder Muttern in beliebigen Längen abgeschnitten werden. Durch den Einsatz von lignozellulosehaltigen Fasern bei der Tragkonstruktion kann CO₂ gebunden werden, was ökologischen Gesichtspunkten vorteilhaft ist.

Die Pfosten können zur Verringerung des Materialeinsatzes als Hohlprofil ausgebildet sein, wobei eine oder mehrere Hohlkammern vorgesehen werden können. Vorzugsweise ist die Hohlkammer im Querschnitt rechteckförmig ausgebildet, wie auch eine Außenkontur der Pfosten.

An den Pfosten können in vertikale Richtung mindestens zwei bifaziale Photovoltaikmodule übereinander angeordnet sein, um die Tragkonstruktion effektiv zu nutzen. Zwischen benachbarten Reihen von Pfosten können Nutzpflanzen vorgesehen werden, wobei der Abstand zwischen solchen Reihen mit bifazialen Photovoltaikmodulen beispielsweise zwischen 2 m bis 5 m beträgt.

Bei dem erfindungsgemäßen Verfahren zur Montage einer Photovoltaik-Anlage werden zunächst mehrere Pfosten aufgestellt und an oder in einem Untergrund verankert. An den Pfosten werden dann Halteelemente fixiert, die im Wesentlichen senkrecht von einem Pfosten hervorstehen, beispielsweise mit ihrer Längserstreckung horizontal ausgerichtet sind, während die Pfosten im Wesentlichen vertikal hervorstehen. Dann wird ein bifaziales Photovoltaikmodul in zwei untere Halteelemente eingesetzt, insbesondere in eine Nut oder Aufnahme an dem jeweiligen Halteelement eingefügt. Anschließend wird das bifaziale Photovoltaikmodul über zwei obere Halteelemente fixiert, die jeweils an einem Pfosten fixiert werden. Auch die oberen Halteelemente können eine Nut oder Aufnahme zur Fixierung des Photovoltaikmoduls aufweisen. Die Halteelemente können dabei baugleich ausgebildet sein, so dass eine effektive Montage möglich ist. Jedes Photovoltaikmodul an der Tragkonstruktion kann einzeln demontiert und ausgetauscht werden.

Die Erfindung wird nachfolgend anhand eines Ausführungsbeispiels mit Bezug auf die beigefügten Zeichnungen näher erläutert. Es zeigen:

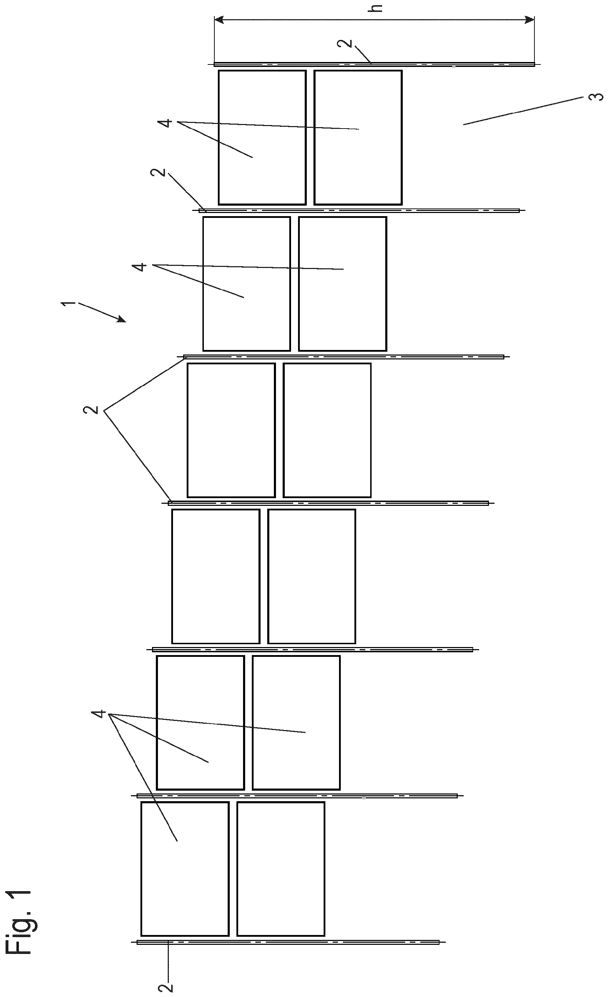

- Figur 1: eine Ansicht einer erfindungsgemäßen Photovoltaik-Anlage;
- Figur 2: eine Detailansicht eines Pfostens zwischen zwei Photovoltaikmodulen;
- Figuren 3A und 3B: zwei Ansichten eines Teils einer Photovoltaik-Anlage mit zwei Pfosten, und
- Figuren 4A und 4B: zwei Detailansichten eines Halteelementes für eine Photovoltaik-Anlage.

Eine Photovoltaik-Anlage 1 umfasst eine Tragkonstruktion mit einer Vielzahl von Pfosten 2, die in einem schematisch dargestellten Untergrund 3 fixiert werden. Die Pfosten 2 besitzen eine Erstreckung in vertikale Richtung von beispielsweise 3 m bis 5 m, wobei ein Teil der vertikalen Erstreckung im Erdreich angeordnet ist, beispielsweise zwischen 60 cm bis 150 cm. In dem Bereich oberhalb des Erdreiches sind zwischen zwei Pfosten 2 jeweils zwei bifaziale Photovoltaikmodule 4 angebracht, die in Draufsicht rechteckförmig sind und an gegenüberliegenden Seiten jeweils eine Oberfläche zur Stromerzeugung aufweisen.

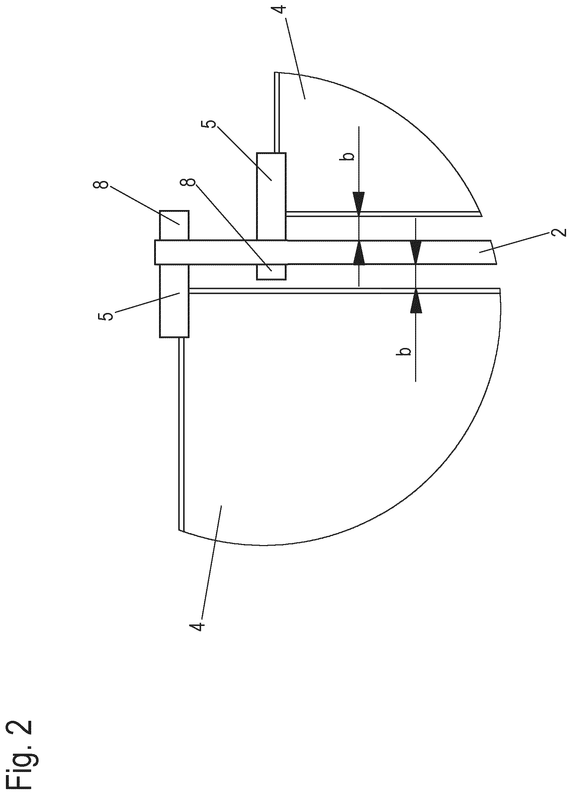

In Figur 2 ist ein Pfosten 2 zwischen zwei Photovoltaikmodulen 4 im Detail gezeigt. An dem Pfosten 2 stehen an gegenüberliegenden Seiten leistenförmige Halteelemente 5 hervor, die jeweils ein einem Eckbereich des rechteckförmigen Photovoltaikmoduls 4 diese umgreifen und an dem Pfosten 2 halten. Jedes Halteelement 5 ist dabei über eine Gewindestange an dem Pfosten 2 fixiert, die den Pfosten 2 durchgreift und an der gegenüberliegenden Seite durch eine Mutter 8 gesichert ist. Die Mutter 8 kann dabei einen Abstandshalter ausbilden, damit ein Photovoltaikmodul 4 nicht an dem Pfosten 2 zur Anlage kommt. Ein Abstand b des Photovoltaikmoduls 4 von dem Pfosten 2 kann beispielsweise zwischen 3 cm bis 7 cm betragen. Das Photovoltaikmodul 4 ist mit Spiel zu der Mutter 8 hin angeordnet, so dass es sich ausdehnen kann.

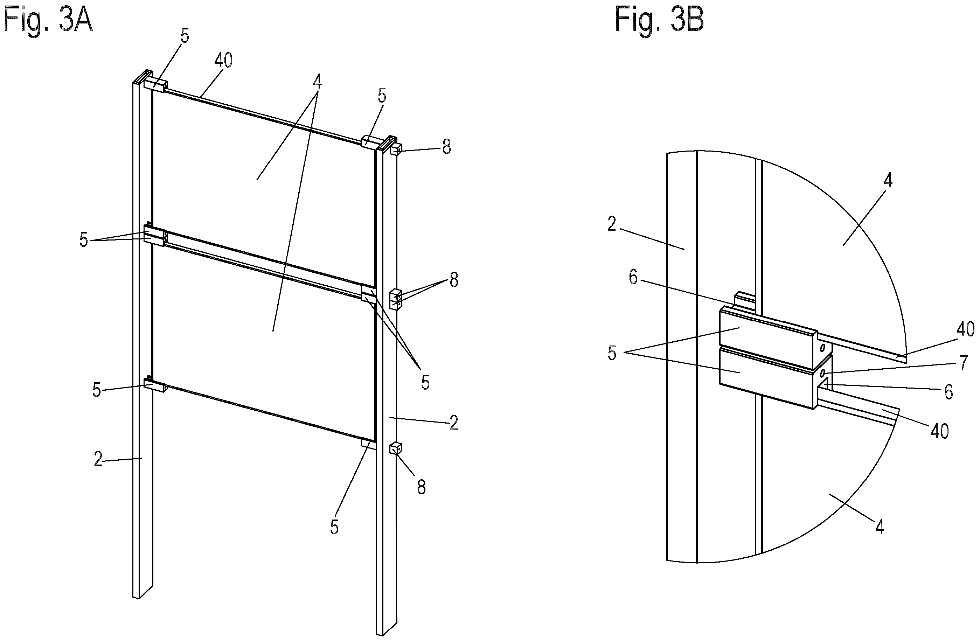

In den Figuren 3A und 3B sind zwei Pfosten 2 der Photovoltaik-Anlage 1 gezeigt. Zwischen den beiden Pfosten sind zwei Photovoltaikmodule 4 übereinander angeordnet, wobei jedes Photovoltaikmodul 4 mit Abstand zu den Pfosten 2 und mit Abstand untereinander gehalten ist. An allen vier Ecken jedes Photovoltaikmoduls 4 sind Halteelemente 5 vorgesehen, die eine Nut 6 aufweisen, in die jeweils ein Rand 40 eines Photovoltaikmoduls 4 teilweise eingefügt ist. Der Rand 40 kann beispielsweise durch ein Metallprofil eines Rahmens des Photovoltaikmoduls 4 gebildet sein. Dabei ist jeweils der horizontale Rand 40 an der Oberseite und an der Unterseite des Photovoltaikmoduls 4 an einem Halteelement 5 fixiert.

Durch die Fixierung in den vier Eckbereichen des Photovoltaikmoduls 4 sind im Übrigen keine weiteren Streben oder Riegel zwischen zwei Pfosten 2 vorgesehen, da die Photovoltaikmodule 4 eine ausreichende Eigenstabilität aufweisen und die Befestigung durch die vier Halteelemente 5 an den vier Eckbereichen ausreichend ist. Die Photovoltaikmodule 4 sind verschiebbar an den Halteelementen 5 gehalten und können sich somit in Längsrichtung ausdehnen oder zusammenziehen, ohne dass es zu Spannungen kommt.

An jedem Halteelement 5 ist eine Öffnung 7 ausgebildet, in die eine Gewindestange eingefügt werden kann, die zumindest teilweise, vorzugsweise vollständig, den Pfosten 2 durchgreift. Auf der zu dem Halteelement 5 gegenüberliegenden Seite ist die Gewindestange durch eine Mutter 8 fixiert, so dass sich die Halteelemente 5 einfach montieren lassen. Hierfür wird nach dem Aufstellen der Pfosten 2 eine Öffnung in die Pfosten 2 eingebracht, durch die dann die Gewindestange durchgesteckt werden kann, so dass jeweils ein Halteelement 5 und eine Mutter 8 an gegenüberliegenden Seiten des Pfostens 2 montiert werden. Dies ermöglicht auch einen nachträglichen Austausch einzelner Photovoltaikmodule 4, die unabhängig voneinander an den Pfosten 2 montiert werden können. Über die Höhe der Pfosten 2 können beispielsweise zwei oder drei Photovoltaikmodule 4 fixiert werden. Dabei können die Photovoltaikmodule 4 in unterschiedlichen Höhen angebracht werden, um die Kontur des Untergrundes 3 zu berücksichtigen.

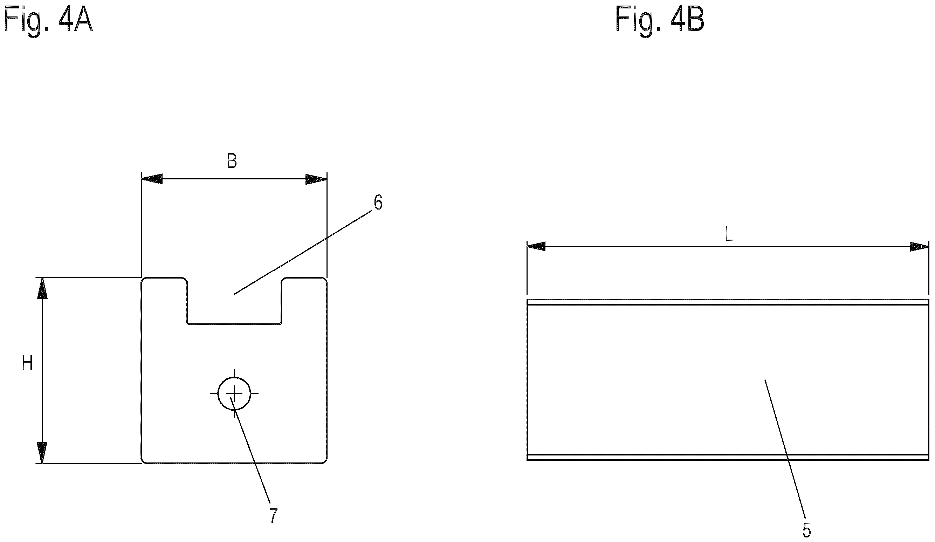

In den Figuren 4A und 4B ist ein Halteelement 5 im Detail gezeigt. Das Halteelement 5 besitzt eine Länge L, die beispielsweise zwischen 10 cm bis 20 cm beträgt und somit deutlich kürzer ist als der Abstand zwischen zwei Pfosten 2. Jedes Halteelement 5 weist eine Nut 6 auf, in der ein Rand 40 des Photovoltaikmoduls 4 eingefügt ist. Benachbart zu der Nut 6 ist eine durchgängige Öffnung 7 in Längsrichtung ausgebildet, in die eine Gewindestange eingefügt werden kann. Die Breite B des Halteelementes 5 kann beispielsweise in einem Bereich zwischen 40 mm bis 80 mm liegen, während die Höhe H ebenfalls im Bereich 40 mm bis 80 mm liegt. Die Breite B und die Höhe H sind bevorzugt geringer als die Breite der Pfosten auf der zu den Photovoltaikmodulen 4 gewandten Seite.

Die Pfosten 2, die Halteelemente 5 und/oder die Muttern 8 sind vorzugsweise aus einem extrudierten Material hergestellt, das eine Mischung aus Kunststoff und Naturfasern enthält, optional auch weitere Füllstoffe. Durch den Einsatz von Naturfasern besitzt die Tragkonstruktion eine positive CO₂-Bilanz, und durch die Einbettung der Naturfasern in Kunststoff werden die Pfosten, Halteelemente und Muttern witterungsbeständig ausgebildet.

### Bezugszeichenliste

- 1: Photovoltaik-Anlage
- 2: Pfosten
- 3: Untergrund
- 4: Photovoltaikmodul
- 5: Halteelement
- 6: Nut
- 7: Öffnung
- 8: Mutter
- 40: Rand
- b: Abstand
- B: Breite
- H: Höhe
- L: Länge

## Patentansprüche

1. Photovoltaik-Anlage (1) mit einer Tragkonstruktion mit einer Vielzahl von in einem Untergrund (3) verankerbaren Pfosten (2) und mindestens einem bifazialen Photovoltaikmodul (4) zwischen zwei benachbarten Pfosten (2), **dadurch gekennzeichnet, dass** das mindestens eine bifaziale Photovoltaikmodul (4) an vier Ecken an jeweils einem Halteelement (5) gehalten ist und jedes Halteelement (5) an einem der Pfosten (2) fixiert ist.

2. Photovoltaik-Anlage nach Anspruch 1, **dadurch gekennzeichnet, dass** jedes Halteelement (5) eine Länge in Richtung einer Längskante des mindestens einem Photovoltaikmoduls (4) besitzt, die weniger als 20% des Abstandes zwischen zwei benachbarten Pfosten (2) beträgt, vorzugsweise zwischen 5% - 15%.

3. Photovoltaik-Anlage nach Anspruch 1 oder 2, **dadurch gekennzeichnet, dass** mindestens eine bifaziale Photovoltaikmodul (4) verschiebbar an dem Halteelement (5) gehalten ist.

4. Photovoltaik-Anlage nach einem der vorhergehenden Ansprüche, **dadurch gekennzeichnet, dass** jedes Halteelement (5) eine Nut (6) aufweist, in die eine Rand (40) des mindestens einen Photovoltaikmoduls (4) eingefügt ist.

5. Photovoltaik-Anlage nach einem der vorhergehenden Ansprüche, **dadurch gekennzeichnet, dass** das mindestens eine Photovoltaikmodul (4) von beiden Pfosten (2) beabstandet angeordnet ist.

6. Photovoltaik-Anlage nach einem der vorhergehenden Ansprüche, **dadurch gekennzeichnet, dass** jedes Halteelement (5) über eine Gewindestange an einem der Pfosten (2) fixiert ist, die den jeweiligen Pfosten (2) zumindest teilweise durchgreift.

7. Photovoltaik-Anlage nach Anspruch 6, **dadurch gekennzeichnet, dass** die Gewindestange an der zu dem Halteelement (5) gegenüberliegenden Seite durch eine Mutter (8) fixiert ist.

8. Photovoltaik-Anlage nach Anspruch 7, **dadurch gekennzeichnet, dass** die Mutter (8) quaderförmig ausgebildet ist und zumindest eine Mutter (8) einen Abstandshalter für ein auf der Seite der mindestens einen Mutter (8) angeordnetes Photovoltaikmodul (4) ausbildet.

9. Photovoltaik-Anlage nach einem der vorhergehenden Ansprüche, **dadurch gekennzeichnet, dass** der mindestens eine Pfosten (2) und/oder die Halteelemente (5) und/oder die Mutter (8) aus einem extrudierten Material aus einer Mischung aus Kunststoff und Naturfasern enthaltene Füllstoffe hergestellt sind.

10. Photovoltaik-Anlage nach einem der vorhergehenden Ansprüche, **dadurch gekennzeichnet, dass** jeder Pfosten (2) als Hohlprofil ausgebildet ist.

11. Photovoltaik-Anlage nach einem der vorhergehenden Ansprüche, **dadurch gekennzeichnet, dass** in vertikale Richtung mindestens zwei bifarziale Photovoltaikmodule (4) übereinander zwischen zwei Pfosten (2) angeordnet sind.

12. Verfahren zur Montage einer Photovoltaik-Anlage (1) mit folgenden Schritten:
- Aufstellen mehrerer Pfosten (2) und Verankern der Pfosten (2) an oder in einem Untergrund (3);
- Fixieren von Halteelementen (5) an den Pfosten (2), die im Wesentlichen senkrecht von einem der Pfosten (2) hervorstehen;
- Einsetzen eines bifazialen Photovoltaikmoduls (4) in zwei untere Halteelemente (5), und
- Fixieren des bifazialen Photovoltaikmoduls (4) über zwei obere Halteelemente (5), die jeweils an einem Pfosten (2) fixiert werden.
